Europäisches Patentamt

(19) European Patent Office

Office européen des brevets

(11) Publication number: **0 131 152**
**B1**

(12) **EUROPEAN PATENT SPECIFICATION**

(45) Date of publication of patent specification: **19.08.87**

(51) Int. Cl.⁴: **B 01 J 2/00,** A 23 G 3/26, B 01 J 13/02, A 61 J 3/00

(21) Application number: **84106394.4**

(22) Date of filing: **05.06.84**

(54) **Drying apparatus for coating or candying machines.**

(30) Priority: **10.06.83 IT 2155383**

(43) Date of publication of application:
**16.01.85 Bulletin 85/03**

(45) Publication of the grant of the patent:
**19.08.87 Bulletin 87/34**

(84) Designated Contracting States:
**CH DE FR GB LI**

(56) References cited:
**DE-A-2 423 933**
**DE-A-2 731 351**
**FR-A-2 222 957**
**FR-A-2 278 316**
**FR-A-2 374 968**
**GB-A-1 008 664**

(73) Proprietor: **G.S. DI SCIPIONI & GIOGOLI S.n.c.**
**Via Puglie, 27**
**I-40060 Osteria Grande (Bologna) (IT)**

(72) Inventor: **Genoni, Nunzio Gabriele**
**Via Bergamo, 19**
**I-21052 Busto Arsizio (Varese) (IT)**

(74) Representative: **Dr. Ing. A. Racheli & C.**
**Viale San Michele del Carso, 4**
**I-20144 Milano (IT)**

Courier Press, Leamington Spa, England.

# Description

This invention relates to an apparatus for coating loose, moving particles, implemented as a rotating drum, having an air inlet means for freely inserting air into said rotating drum and having means for the removal of air, said means for the removal of air comprising a perforated body connected to a conveyor.

Herein the term "coating" comprises also a candying process.

Different types of drums and different drying apparatuses are already known. Some provide air inlet and outlet freely on the surface of the moving mass of particles, while others provide instead such air inlet and outlet shaped hollow bodies which penetrate into the mass of the moving particles. The first of these systems has the disadvantage of requiring very long candying periods, while it gives rise to powder that grows bigger and bigger in the course of the candying operation, thus forming in the drum an undesirable granulous residue. On the other hand, the second system has the disadvantage of requiring a high consumption of energy for ventilation. Furthermore, in this case, the drum remains always at a lower temperature than that of the mass of particles to be candied.

Another known type of drum (DE—A— 2 731 351) provides air inlet in the drum chamber and means for the removal of air from the drum periphery which has perforated areas. However, this system has the disadvantage of being unsuitable to ensure that cleaning operations carried out at the end of workings would lead to a complete removal of the residues, since the perforations in the drum walls prevent an easy and efficient cleaning.

Therefore, it is the object of the present invention to provide a drying apparatus for coating or candying machine drums enabling a fast candying process free of powder formation and at the same time allowing an easy cleaning of the drum.

It is another object of the invention to provide an extremely versatile type of drying apparatus, combining the advantages of all the systems hitherto known.

The above object has been achieved as specified in claim 1.

Other advantageous solutions are described in claims 2—6.

The invention will be further described with reference to an exemplary embodiment shown in the accompanying drawings, in which:

Fig. 1 is a side sectional view of a drum, in which the proposed drying apparatus is used;

Fig. 2 is a sectional view taken along line 2—2 of Fig. 1; and

Fig. 3 is a sectional view taken along line 3—3 of Fig. 2.

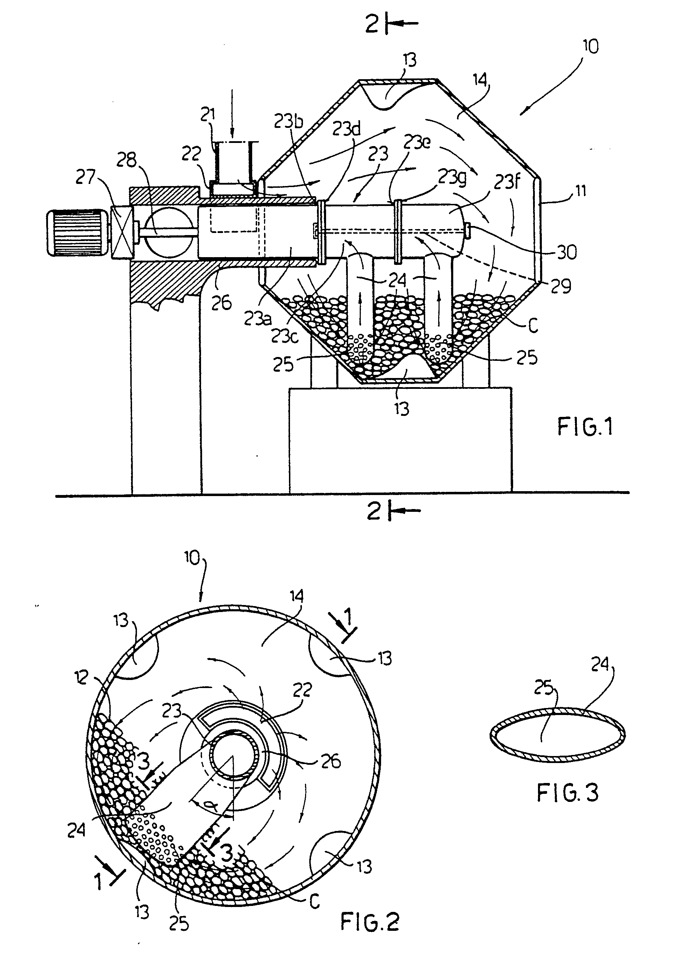

Referring to the drawings, it will be seen that reference numeral 10 denotes the rotating drum as a whole. Tablets, lozenges and in general particles are inserted therein, for example through the door 11. When the drum starts to rotate they will form a rolling mass C, the surface 12 of which is inclined (see fig. 2).

The drum is further provided with blades 13.

The drying apparatus comprises an air inlet channel 21 which leads to a semicircular distributing crown 22, which freely admits air into the drum cavity 14.

Air removal takes place through the conveyor 23 arranged along the axis of drum 10. It receives air from two tubes 24 penetrating into the mass of moving particles C. Said tubes 24 terminate at their end very close to the drum periphery with a perforated hollow body 25 of elongate elliptical shape in cross-section (see Fig. 3). The end side walls and bottom of said hollow body 25 are provided with small holes through which the air is sucked in.

The conveyor 23 is axially arranged in the drum 10 and is rotatably mounted within the fixed bearing 26. The conveyor 23 is connected through a shaft 28 to a geared motor 27, so that it can rotate, moving the hollow body 25 at an inclined position thus forming an angle α relative to the vertical, which depends on the kind of particles being processed, on the speed of the drum and on their smoothness. Particularly, when required, said tubes 24 could be also upward displaced out of the mass of particles, so as not to interfere therewith.

It is also provided that said tubes 24 can be easily separated from the conveyor 23 so that they can be removed from the drum 10, in order that the latter may be easily and readily washed or flushed without suffering any obstruction from said hollow bodies. Moreover, said hollow bodies can thus be also separately washed to ensure complete elimination of residues. Particularly, the conveyor 23 may comprise a first conveyor length 23a having a flanged coupling 23b, to which a second length 23c having flanged couplings 23d and 23e is connected, to which a third closed length 23f with couplings 23g is then secured. The lengths 23c and 23f are integral, respectively, with one of said sucking tubes 24. A tie rod 29 with a knob 30 fixes together the whole sucking system comprising said conveyor 23.

The air flow has been shown by the arrows in Figs. 1 and 2. The air enters from the inlet channel 21, arrives at the distributing crown 22 and then inside of the cavity 14 of the drum 10. Now, the air is compelled to penetrate into the mass C of particles to be coated to reach the hollow bodies 25, and then the tubes 24 and the conveyor 23.

# Claims

1. An apparatus for coating loose, moving particles, implemented as a rotating drum, having an air inlet means for freely inserting air into said rotating drum and having means for the removal of air, said means for the removal of air comprising a perforated body connected to a conveyor, characterized in that said means for the removal of air comprise one or more perforated hollow bodies which can be disassembled from the conveyor and which are immersed in the mass of said loose, moving particles.

2. An apparatus as claimed in claim 1, characterized in that two hollow bodies (25) are provided as arranged on either side of the blades (13) of the rotating drum.

3. An apparatus as claimed in claim 1 or 2, characterized in that said hollow bodies (25) for the removal of air are arranged as near as possible to the drum periphery.

4. An apparatus as claimed in claim 1, characterized in that said hollow body (25) is of elliptical shape in cross-section.

5. An apparatus as claimed in claim 1, characterized in that it is provided to adjust the angular position ($\alpha$) of the hollow body (25) or bodies with respect to a vertical plane passing through the drum axis.

6. An apparatus as claimed in claim 5, characterized in that the hollow bodies (25) are connected to a conveyor (23), of which the axis is coincident with the drum axis and that said conveyor (23) is mounted for rotation about its own axis.

## Patentansprüche

1. Vorrichtung zum Uberziehen von losen beweglichen Teilchen, bestehend aus einer Drehtrommel mit einem Mittel für den freien Lufteinlaß in die Trommel und Mittel für den Luftabzug, die einen mit einem Förderer verbundenen Lochkörper aufweisen, dadurch gekennzeichnet, daß die Luftabzugsmittel einen oder mehrere gelochte Hohlkörper aufweisen, die in der Menge der Teilchen eingetaucht sind und vom Förderer abmontiert werden können.

2. Vorrichtung nach Anspruch 1, dadurch gekennzeichnet, daß zwei Hohlkörper (25) vorgesehen sind, die auf den beiden Seiten der Schaufeln (13) der Drehtrommel angeordnet sind.

3. Vorrichtung nach Anspruch 1 oder 2, dadurch gekennzeichnet, daß die Hohlkörper (25) für den Luftabzug so nahe wie möglich am Umfang der Drehtrommel angeordnet sind.

4. Vorrichtung nach Anspruch 1, dadurch gekennzeichnet, daß der Hohlkörper (25) einen ellipsenförmigen Schnitt hat.

5. Vorrichtung nach Anspruch 1, dadurch gekennzeichnet, daß vorgesehen ist, die Winkelstellung ($\alpha$) des Hohlkörpers (25) oder der Hohlkörper gegenüber einer durch die Trommelachse gehenden senkrechten Ebene zu regeln.

6. Vorrichtung nach Anspruch 5, dadurch gekennzeichnet, daß die Hohlkörper (25) mit dem Förderer (23), dessen Achse mit der Trommelachse zusammenfällt, verbunden sind und daß der Förderer (23) so montiert ist, daß er sich frei um seine Achse drehen kann.

## Revendications

1. Appareil pour l'enrobage de particules en vrac en mouvement réalisé sous forme d'un tambour rotatif, ayant un moyen pour l'entrée de l'air qui est librement introduit dans ledit tambour rotatif et des moyens pour l'évacuation de l'air, lesdits moyens d'évacuation comprennent un corps percé de trous relié à un convoyeur, caractérisé par le fait que lesdits moyens d'évacuation de l'air comprennent un ou plusieurs corps creux percés de trous qui peuvent être démontés et séparés du convoyeur, qui sont plongés dans la masse de particules en vrac en mouvement.

2. Appareil selon la revendication 1, caractérisé par le fait que sont prévus deux corps creux (25) placés sur les deux côtés des ailettes 13 du tambour rotatif.

3. Appareil selon la revendication 1 ou 2, caractérisé par le fait que lesdits corps creux (25) pour l'évacuation de l'air sont placés le plus près possible de la périphérie du tambour.

4. Appareil selon la revendication 1, caractérisé par le fait que ledit corps creux 25 a en section terminale une forme elliptique.

5. Appareil selon la revendication 1, caractérisé par le fait que l'on prévoit de régler la position angulaire ($\alpha$) du corps creux (25) ou des corps creux par rapport à un plan vertical passant par l'axe du tambour.

6. Appareil selon la revendication 5, caractérisé par le fait que les corps creux (25) sont reliés à un convoyeur (23) dont l'axe coïncide avec l'axe du tambour et que ledit convoyeur (23) est monté de façon à pouvoir tourner autour de son axe.

FIG.1

FIG.2

FIG.3